# FASCICULE DE BREVET EUROPEEN

(11) **EP 2 310 219 B1**
(45) Date de publication et mention de la délivrance du brevet: **19.04.2017**
(21) Numéro de dépôt: 09797568.4
(22) Date de dépôt: 11.06.2009
(51) Int. Cl.: B60J 5/04

(54) **DISPOSITIF DE PROTECTION POUR UNE PORTE DE VEHICULE AUTOMOBILE**
SCHUTZVORRICHTUNG FÜR EINE KRAFTFAHRZEUGTÜR
PROTECTION DEVICE FOR A MOTOR VEHICLE DOOR

(30) Priorité: 16.07.2008 FR 0854850
(43) Date de publication de la demande: 20.04.2011
(73) Titulaire: Renault s.a.s., 92100 Boulogne-Billancourt (FR)
(72) Inventeur: OLLIVIER, Jean Louis, F-78960 Voisins le Bretonneux (FR); HEWAK, Gregor, F-95490 Vaureal (FR)
(86) Numéro de dépôt international: PCT/FR2009/051101
(87) Numéro de publication internationale: WO 2010/007269

(56) Documents cités:
- EP-A- 1 790 552
- DE-A1- 19 957 986
- DE-A1-102008 025 330
- JP-A- 60 236 879

## Description

La présente invention concerne un dispositif permettant de protéger à la fois la partie inférieure d'une porte de véhicule, et la structure de caisse dudit véhicule.

L'invention trouve une application particulièrement avantageuse dans le domaine automobile.

Dans un véhicule automobile standard, la rigidité de la structure de caisse provient notamment des bavolets, c'est-à-dire des deux corps creux en tôle qui sont solidarisés longitudinalement de part et d'autre du plancher, et qui s'étendent directement sous les portes latérales du véhicule. Par ailleurs, les portes latérales en question sont généralement implantées et dimensionnées de manière à pouvoir s'ouvrir librement au dessus des trottoirs, ce qui sous-entend sans risque d'être endommagées de manière systématique.

Cette configuration classique présente toutefois l'inconvénient de rendre l'habitacle du véhicule parfois difficilement accessible, plus particulièrement pour les personnes âgées. On sait en effet que l'accessibilité à un siège dépend notamment de la distance entre l'axe de ce siège et le bord externe du bavolet correspondant. Or, les véhicules d'aujourd'hui étant de plus en plus larges, cette cote a tendance à s'accroître excessivement, ce qui complique d'autant l'accès à l'intérieur de l'habitacle.

Pour remédier à la situation, on a pensé à supprimer les bavolets et à utiliser des portes latérales descendant jusqu'en regard du plancher du véhicule.

Un premier inconvénient de cette configuration est que chaque bas de porte se retrouve alors potentiellement en dessous de la ligne de trottoir. Il est par conséquent susceptible d'être endommagé à chaque ouverture de porte, dès lors que le véhicule est positionné à coté d'un quelconque obstacle dont la hauteur est voisine de celle d'un trottoir.

Un autre désavantage d'une telle configuration concerne le faible niveau de protection offert aux occupants du véhicule en cas d'accident de la route. En effet, outre leur fonction de rigidification, les bavolets sont également chargés de résister à un éventuel choc frontal et/ou latéral de forte intensité. Leur suppression s'avère par conséquent particulièrement préjudiciable pour la sécurité.

Aussi, le problème technique à résoudre par l'objet de la présente invention est de proposer un dispositif de protection pour une porte de véhicule automobile montée mobile en déplacement par rapport à une structure de caisse intégrant un plancher, dispositif de protection qui permettrait d'éviter les problèmes de l'état de la technique en procurant notamment une accessibilité améliorée à l'habitacle du véhicule, tout en préservant la résistance aux chocs du véhicule ainsi que l'intégrité de la porte.

La solution au problème technique posé est montrée dans la revendication 1, selon laquelle le dispositif de protection comporte un élément de renfort qui est solidarisé fixement sous la porte et qui est destiné à s'étendre directement en regard du plancher lorsque ladite porte est en position fermée.

Il est important de préciser que le fait que l'élément de renfort s'étende directement en regard du plancher, signifie qu'il est positionné en lieu et place d'un classique bavolet de l'art antérieur. Cela sous-entend que le bavolet en question, ou tout du moins la partie correspondante dudit bavolet, a été supprimée au niveau de la structure de caisse.

Le principe de l'invention consiste donc à utiliser une porte de structure et d'implantation standards, c'est-à-dire à même de s'ouvrir librement au dessus d'un trottoir, et à greffer à sa partie inférieure une sorte d'extension plus particulièrement chargée de résister à des chocs d'intensités et de directions variées. Cela revient à transférer la fonction de protection traditionnellement assurée par le bavolet, de la structure de caisse à la porte latérale.

L'invention est applicable à toute porte de véhicule automobile, quelle que soit sa cinématique de déplacement par rapport à la structure de caisse.

Quoi qu'il en soit, l'invention telle qu'ainsi définie présente l'avantage d'accroître notablement l'accessibilité à l'habitacle du véhicule. La suppression du bavolet permet en effet de réduire la distance entre le côté de caisse et l'axe du siège, ce qui facilite d'autant le passage d'une position debout à l'extérieur du véhicule, à une position assise à l'intérieur de l'habitacle, et vice-versa.

Ce gain en accessibilité ne se fait pas au détriment de la sécurité puisque la disparition du bavolet sur la structure de caisse est compensée par la présence du dispositif de protection sous ou dans la porte. De plus, l'élément de renfort est conformé de manière à pouvoir absorber efficacement aussi bien les chocs transversaux que les chocs longitudinaux. L'intégrité des occupants du véhicule peut ainsi être avantageusement préservée lors d'un accident de la route par exemple.

Un autre intérêt de l'invention concerne davantage les petits chocs liés à l'utilisation quotidienne du véhicule. Le dispositif de protection étant positionné au niveau du bas de porte, c'est-à-dire de la partie la plus vulnérable de la porte dans les conditions précitées, il est en mesure de jouer pleinement un rôle de tampon en encaissant les impacts à la place de ladite porte. Cela sous-entend bien sûr qu'on accepte que le dispositif de protection puisse être endommagé, notamment lorsque la porte est ouverte trop violemment contre un quelconque obstacle dont la hauteur est légèrement supérieure à celle d'un trottoir. Un intérêt complémentaire est de permettre un anti-gravillonnage efficace, c'est-à-dire une protection contre les projections de gravillons lors du roulage.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 est une coupe transversale illustrant l'intégration sur un véhicule automobile d'un dispositif de protection conforme à un premier mode de réalisation de l'invention.
La figure 2 est un éclaté en perspective arrière de la porte et du dispositif de protection visibles à la figure 1.
La figure 3 constitue une vue analogue à la figure 2, mais suivant une perspective arrière de direction différente.
La figure 4 est un éclaté en perspective avant faisant apparaître un dispositif de protection conforme à un second mode de réalisation de l'invention.
La figure 5 constitue une vue similaire à la figure 4, mais en perspective arrière.
La figure 6 montre l'ensemble des composants représentés aux figures 4 et 5, une fois totalement assemblés.
La figure 7 est coupe transversale illustrant l'intégration sur un véhicule automobile d'un dispositif de protection conforme à un troisième mode de réalisation de l'invention.
La figure 8 est un éclaté en perspective arrière de la porte et du dispositif de protection visibles à la figure 7.
La figure 9 constitue une vue analogue à la figure 8, mais en perspective avant.
La figure 10 fait apparaître l'ensemble des composants représentés aux figures 8 et 9, une fois totalement assemblés.
La figure 11 illustre de manière partielle un côté de caisse d'un véhicule automobile, avant la mise en place du dispositif conforme à l'invention.
La figure 12 est une vue similaire à la figure 11, sur laquelle ont été positionnés les éléments de renfort de deux dispositifs de protection conforme à l'invention.
La figure 13 montre par transparence et en perspective arrière, l'imbrication entre la structure de caisse représentée de la figure 11 d'une part, et une porte associée à son dispositif de protection d'autre part.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

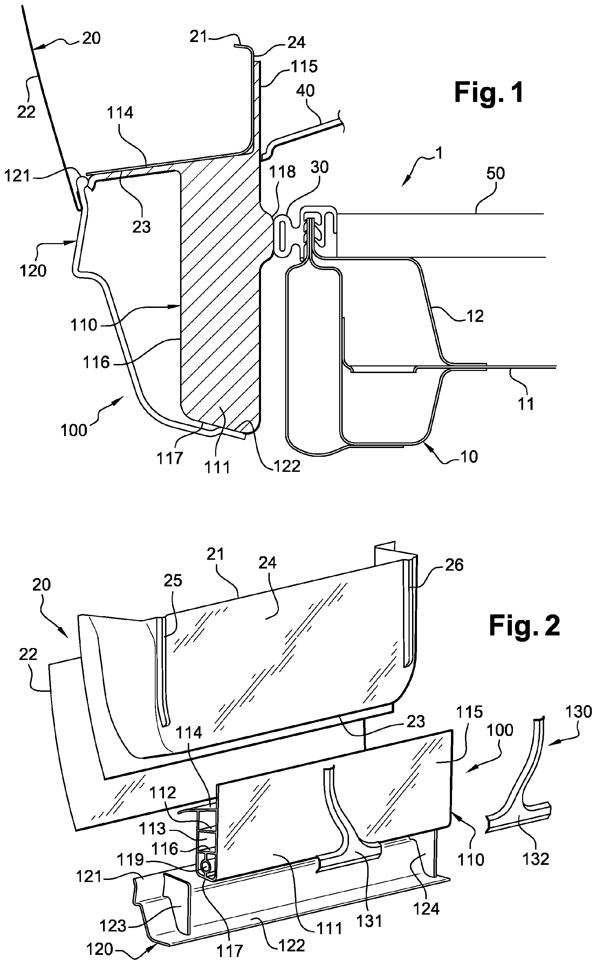

Les figures 1 à 3 concernent donc un dispositif de protection 100 qui est conforme à un premier mode de réalisation de l'invention.

Ainsi qu'on peut le voir sur la figure 1, le dispositif de protection **100** équipe un véhicule automobile **1** dont la structure de caisse **10** est pourvue d'un plancher **11** intégrant un longeron **12** le long de chacun de ses bords latéraux. Le dispositif de protection **100** est par ailleurs associé à une porte latérale **20** qui est classiquement montée pivotante par rapport à la structure de caisse **10** et qui présente une constitution tout aussi conventionnelle puisqu'elle résulte schématiquement de l'assemblage d'un caisson **21** et d'un panneau de porte extérieur **22**.

Sur cette première coupe transversale, on observe également la présence d'un joint **30** chargé d'assurer l'étanchéité entre la structure de caisse **10** et la porte **20**. Pour cela le joint **30** est solidarisé à la structure de caisse **10** sur tout le tour de l'encadrement destiné à recevoir la porte **20** en position fermée, et il est à même de coopérer par contact étanche avec le pourtour complet de ladite porte **20**.

A l'intérieur de l'habitacle du véhicule **1**, on aperçoit en outre un élément de finition faisant partie de l'habillage de porte **40**, ainsi qu'une épaisse pièce de moquette **50** s'étendant parallèlement au plancher **11**.

Conformément à l'objet de la présente invention, le dispositif de protection **100** comprend un élément de renfort **110** qui est fixé sous la porte **20**. L'ensemble est par ailleurs agencé de manière à ce que cet élément de renfort **110** s'étende directement en regard du plancher **11** lorsque la porte **20** est en position fermée, en l'occurrence en vis-à-vis du longeron **12** de la structure de caisse **10** dans le cas présent.

De manière particulièrement avantageuse, l'élément de renfort **110** est fixé à la porte **20** de manière amovible. Cette caractéristique offre en effet la possibilité de pouvoir démonter l'élément de renfort **110** en vue de le réparer ou de le changer notamment au cas où il serait endommagé consécutivement à un choc violent.

Dans cet exemple de réalisation, l'élément de renfort **110** est vissé sur le caisson de porte **21**, mais bien entendu tout autre technique de fixation réversible connue de l'état de la technique pourrait être utilisée de manière équivalente.

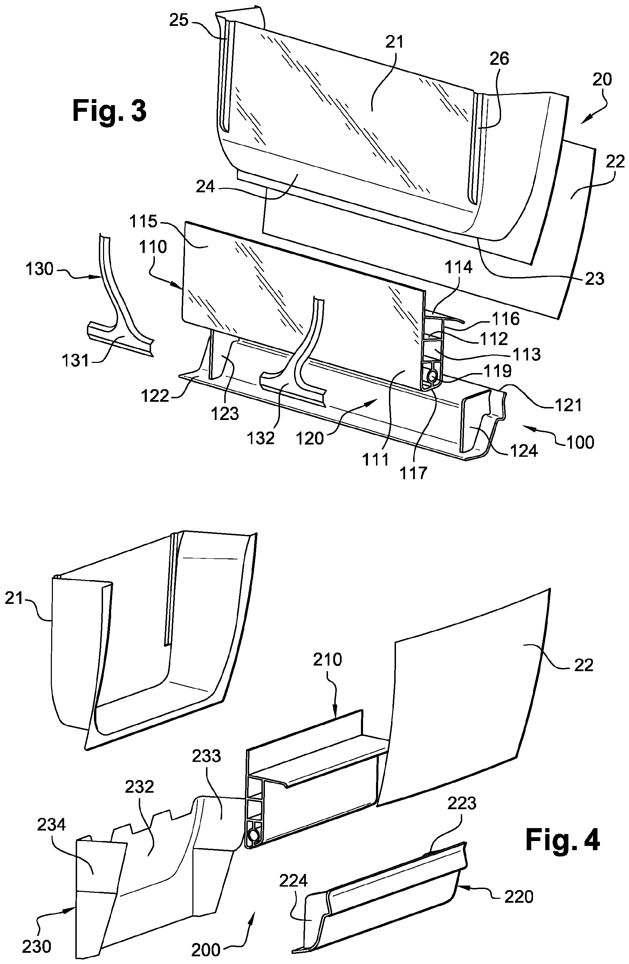

Ainsi qu'on peut le voir plus clairement sur les figures 2 et 3, l'élément de renfort **110** est constitué par un profilé extrudé **111** dans ce premier mode de réalisation de l'invention. Son aspect général est celui d'une poutre creuse sensiblement parallélépipédique, dans laquelle s'étendent des parois de rigidification **112** divisant son volume intérieur en plusieurs compartiments longitudinaux **113**, ou de façon plus générale des compartiments dont les orientations sont favorables au respects des chocs.

Le profilé extrudé **111** présente une forme sensiblement complémentaire du bas de porte. C'est ainsi qu'il est délimité en partie supérieure par une paroi sensiblement horizontale **114** qui épouse au mieux la paroi inférieure **23** du caisson **21**, et en partie arrière par une paroi sensiblement verticale **115** qui épouse au mieux la paroi arrière **24** dudit caisson **21**.

Dans cet exemple de réalisation, l'élément de renfort **110** est réalisé en métal, et plus précisément en aluminium.

Conformément à une autre caractéristique avantageuse, l'élément de renfort **110** comporte un moyen de centrage sous forme d'un trou de centrage **119** à même de coopérer par emboîtement avec un élément saillant solidaire de la structure de caisse **10**, lorsque la porte **20** est en position fermée.

Selon l'invention, le dispositif de protection **100** est également doté d'un élément de protection **120** recouvrant la face avant **116** de l'élément de renfort **110**.

Il est entendu ici que la face avant **116** correspond à toute la partie de l'élément de renfort **110** qui est tournée vers l'extérieur du véhicule automobile **1**, et qui n'est donc pas positionné directement en regard d'un quelconque composant dudit véhicule **1**.

Il est également important de souligner que le fait que l'élément de protection **120** recouvre la face avant **116** de l'élément de renfort **110** signifie simplement que ces deux pièces sont juxtaposées, c'est-à-dire qu'elles s'étendent en regard l'une de l'autre sans pour autant forcément se toucher. Bien évidemment, elles peuvent n'être que partiellement en contact comme dans l'exemple de réalisation des figures 1 à 3.

On précise par ailleurs que la fonction de l'élément de protection **120** est avant tout de protéger la porte **20** des petits chocs de la vie quotidienne, et notamment des ouvertures trop énergiques contre tout obstacle placé à hauteur de trottoir. Dans cette logique, l'élément de protection **120** est réalisé de préférence en matière plastique.

Par ailleurs, l'élément de protection **120** agit efficacement pour limiter les impacts des gravillons qui peuvent être soulevés lors du roulage, et qui viennent traditionnellement endommager le bas de porte. Cette fonction d'anti-gravillonnage est donc particulièrement avantageuse.

De manière particulièrement avantageuse, l'élément de protection **120** est solidarisé à la porte **20** de manière amovible.

De par sa fonction, il apparaît pertinent que l'élément de protection **120** soit solidarisé de manière réversible afin de pouvoir être remplacé facilement en cas de dommages. Mais l'utilisation d'une telle technique de fixation s'avère également particulièrement avantageuse pour éviter qu'une liaison trop rigide n'entraîne indirectement une déformation de la porte **20**, dès lors que l'élément de protection **120** serait trop fortement sollicité.

Cette notion d'amovibilité sous-entend par ailleurs que l'élément de protection **120** est au moins en partie solidaire de la porte **20**. Dans cet exemple de réalisation, choisi uniquement à titre d'exemple, cela se limite au bord supérieur **121** de l'élément de protection **120** qui est simplement clippé sur la porte **20**. Le maintien en position est réalisé par une gouge formée par la porte **2** et le renfort **110**. Une pression est obtenue par la déformation de l'élément de protection **120**.

Conformément à l'invention, l'élément de protection **120** est solidarisé à l'élément de renfort **110** de manière amovible.

Comme précédemment, cette caractéristique trouve sa justification dans la nécessité de pouvoir démonter aisément l'élément de protection **120**. Mais cette fois, il est sous-entendu que l'élément de protection **120** est au moins en partie solidaire de l'élément de renfort **110**, ce qui se matérialise dans le cas présent par le fait que le bord inférieur **122** de l'élément de protection **120** est vissé sur la paroi inférieure **117** de l'élément de renfort **110**.

Dans ce mode particulier de réalisation, choisi uniquement à titre d'exemple, l'élément de protection **120** recouvre en outre les faces latérales de l'élément de renfort **110** au moyen de deux parois latérales **123**, **124**.

Cette caractéristique permet avantageusement d'obturer les deux extrémités du profilé **111** qui par définition sont ouvertes en raison du fait qu'il s'agit d'une pièce extrudée, mais aussi de servir de finition par rapport au caisson de porte **21**.

Selon une autre particularité de l'invention, le dispositif de protection **100** comporte par ailleurs des moyens d'étanchéité **130** assurant une continuité formelle entre la face arrière de la porte **20**, matérialisée ici par la paroi arrière **24** du caisson **21**, et la face arrière de l'élément de renfort **110**, c'est-à-dire la paroi arrière **115**.

Dans cet exemple de réalisation, les moyens d'étanchéité **130** se composent de deux pièces **131**, **132** sensiblement en forme de "T". Ces dernières sont ainsi conformées de manière à pouvoir, d'une part, s'emboîter respectivement sur les deux pistes d'étanchéités **25**, **26** ménagées verticalement à l'arrière du caisson de porte **21** (figures 2 et 3) et, d'autre part, s'emboîter sur la même piste d'étanchéité **118** s'étendant horizontalement à l'arrière de l'élément de renfort **110** (figure 1). L'ensemble est ainsi agencé de manière à obtenir une unique piste sensiblement continue **25**, **26**, **118** sur laquelle peut venir s'appuyer le joint d'étanchéité **30** précédemment décrit.

Les figures 4 à 6 sont quant à elles relatives à un dispositif de protection **200** qui est conforme à un second mode de réalisation de l'invention.

Celui-ci se distingue du premier précédemment décrit, essentiellement par le fait que les deux pièces d'étanchéité **131**, **132** sont remplacées ici par un élément d'étanchéité **230** qui est emboîté avec l'élément de protection **220** pour former un ensemble sensiblement étanche qui enveloppe conjointement l'élément de renfort **210** et la partie basse de la porte **20**.

Dans cet exemple de réalisation, l'élément d'étanchéité **230** se présente sous la forme d'un capot **231** qui est sensiblement complémentaire de l'élément de protection **220**. Il est formé schématiquement par l'association de trois parois disposées perpendiculairement les unes aux autres, à savoir d'une paroi principale **232** et de deux parois latérales **233**, **234**.

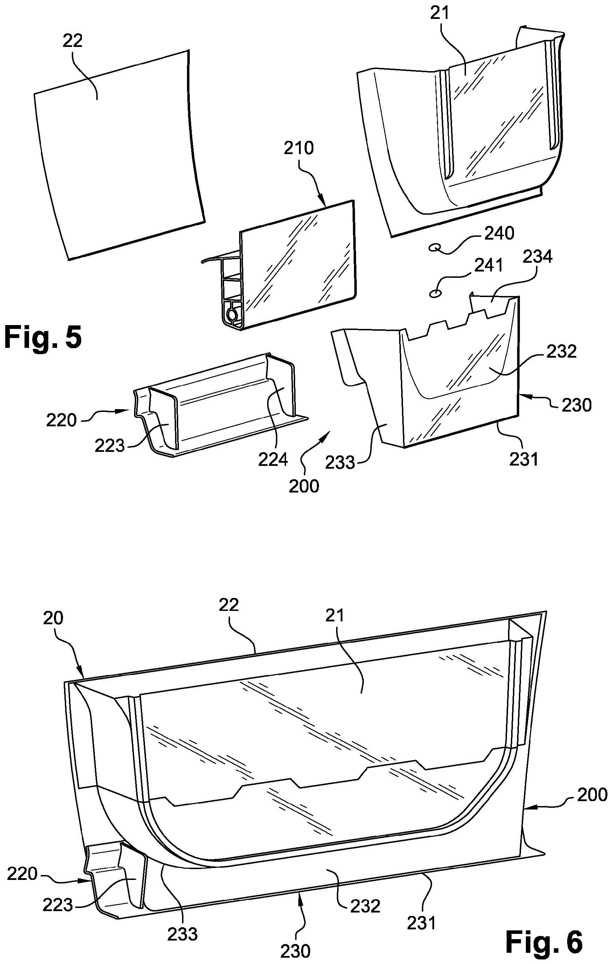

Ainsi qu'on peut le voir à la figure 6, l'ensemble est par ailleurs agencé de manière à ce qu'une fois le dispositif de protection **200** complètement assemblé sur la porte **20**, il y ait un recouvrement entre les parois latérales **223**, **224** de l'élément de protection **220** et les parois latérales **233**, **234** de l'élément d'étanchéité **230**.

De manière particulièrement avantageuse, l'élément d'étanchéité **230** est solidarisé à la partie basse de la porte **20** de manière amovible.

Conformément à une autre caractéristique avantageuse de l'invention, l'élément d'étanchéité **230** est solidarisé à l'élément de renfort **210** de manière amovible.

Là encore, l'utilisation de techniques de fixation réversible est avant tout dictée par les impératifs de réparation ou de remplacement déjà évoqués.

Les figures 4 et 5 font par ailleurs apparaître deux éléments saillants **240**, **241** qui sont destinés à être solidarisés à la structure de caisse **10** du véhicule **1**, afin de pouvoir coopérer par emboîtement avec deux trous de centrage ménagés au niveau de l'élément de renfort **210**.

Conformément à une variante non représentée de ce second mode de réalisation, l'élément d'étanchéité **230** et l'élément de protection **220** pourraient être fusionnés en une seule et même pièce. Cela reviendrait à avoir un dispositif de protection **200** dont l'élément de protection **220** envelopperait l'élément de renfort **210**.

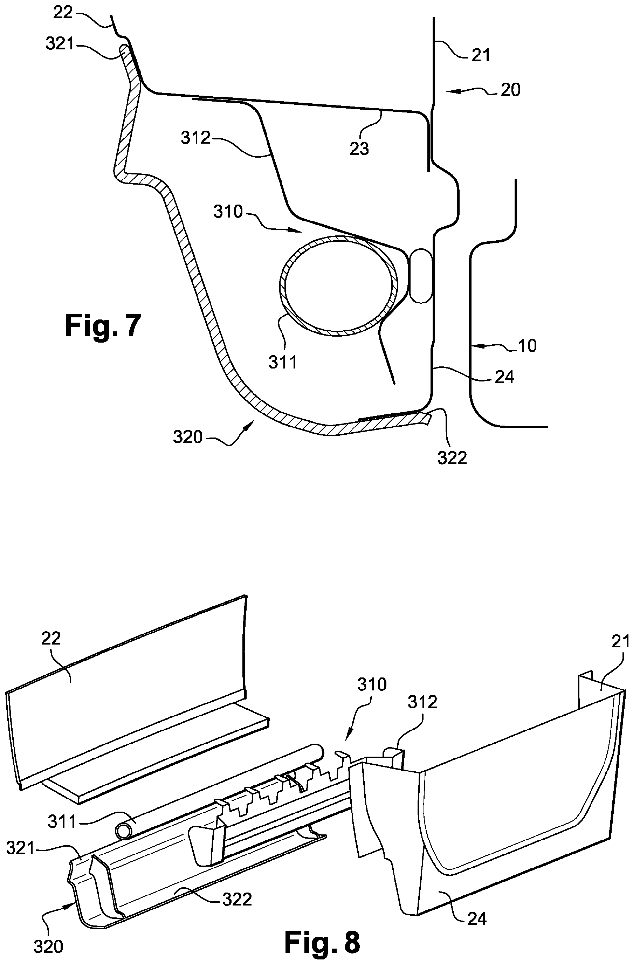

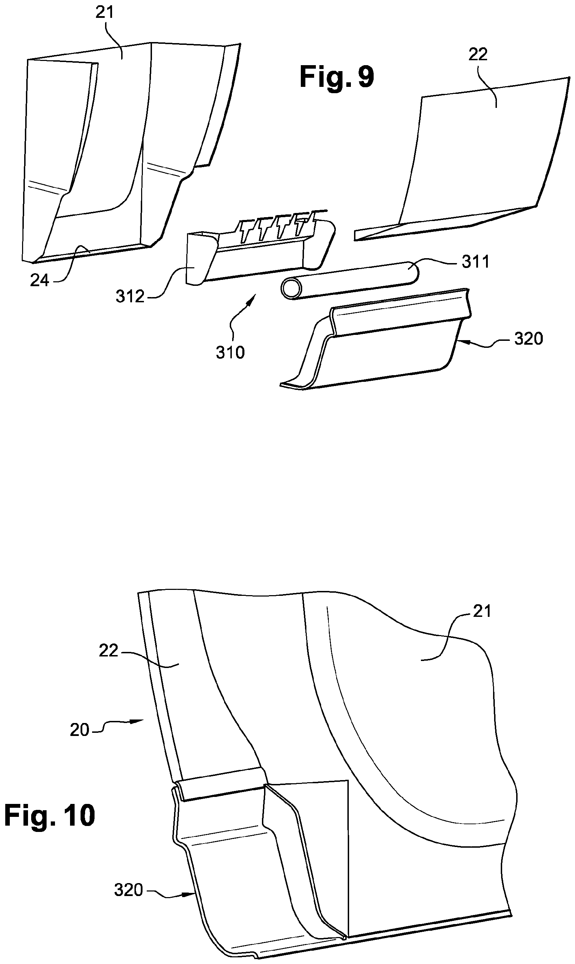

Les figures 7 à 10 représentent un dispositif de protection **300** conforme à un troisième mode de réalisation de l'invention, qui se caractérise principalement par le fait qu'il dispose d'un élément de renfort **310** se présentant sous la forme d'un tube **311** qui est solidarisé à la porte **20** par l'intermédiaire d'un support **312**.

Dans cet exemple de réalisation, le tube **311** est réalisé en métal et il présente une section circulaire, tandis que le support **312** est constitué par une tôle métallique pliée.

Ainsi qu'on peut le voir sur la figure 7, le tube **311** est soudé sur le support **312** qui est pour sa part solidarisé longitudinalement sous la porte **20** par soudage au niveau de la paroi inférieure **23** du caisson de porte **21,** et par collage au niveau de la paroi arrière **24** dudit caisson **21**.

L'élément de protection **320** est pour sa part solidarisé via son bord supérieur **321** qui est clippé au niveau du caisson **21**, et son bord inférieur **322** qui est vissé sur le panneau arrière **24**.

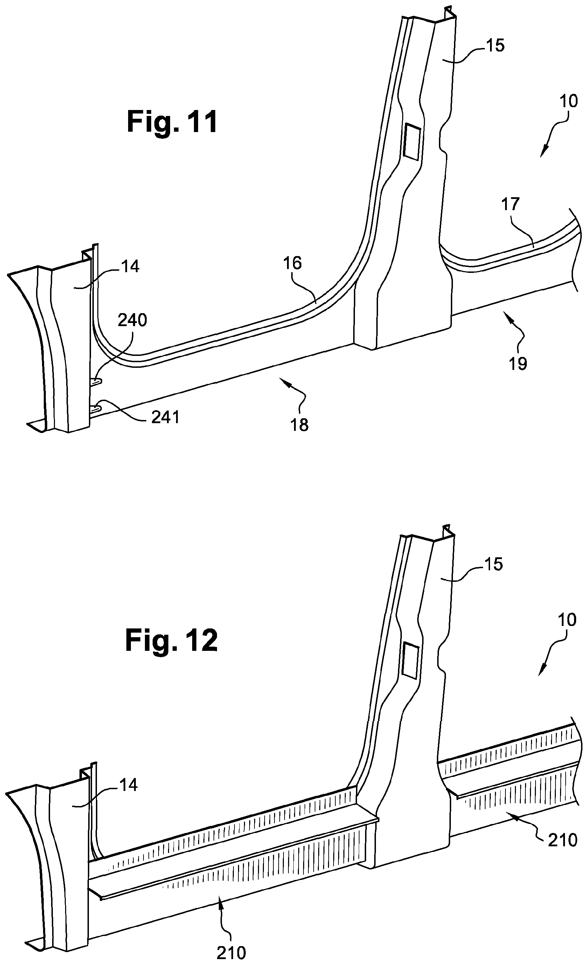

Les figures 11 et 12 représentent une partie de la structure de caisse **10** du véhicule **1**, qui est agencée pour recevoir deux portes battantes **20 é**quipées chacune d'un dispositif de protection **200** tel que précédemment décrit. Il s'agit en fait d'un côté de caisse **13** sur lequel on distingue notamment un pied avant **14**, un pied milieu **15**, un encadrement de porte avant **16** et un encadrement de porte arrière **17**.

La figure 11 fait également apparaître l'implantation et le positionnement des deux éléments saillants **240**, **241** au niveau du pied avant **14**.

Elle révèle en outre la présence de deux logements **18**, **19** qui sont respectivement à même de recevoir les deux dispositifs de protection lorsque les portes correspondantes sont en position fermée, conformément à la figure 12.

Car selon une particularité particulièrement avantageuse de l'invention, chaque dispositif de protection **200** est ici en mesure de s'intégrer dans un logement **18**, **19** de forme sensiblement complémentaire, qui est ménagé dans la structure de caisse **10** au niveau du plancher **11**.

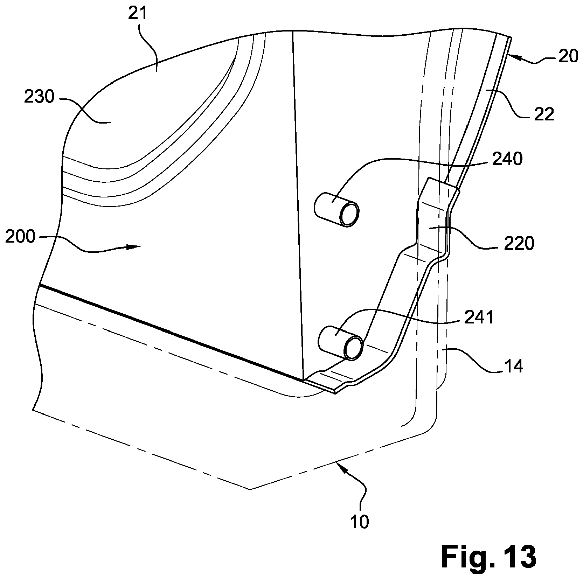

La figure 13 illustre en détail l'emboîtement entre les éléments saillants **240**, **241** solidaires de la structure de caisse **10** et les trous de centrage ménagés dans le dispositif de protection **200**. Cette caractéristique permet de réaliser un maintien du dispositif de protection **200** par rapport à la structure de caisse **10,** avec pour objectif final d'empêcher un éventuel déplacement en cas de choc longitudinal ou transversal trop intense.

Bien entendu, l'invention concerne également toute porte **20** de véhicule automobile 1 pourvue d'un dispositif de protection **100, 200, 300** tel que précédemment décrit.

Mais plus généralement encore, l'invention est en outre relative à tout véhicule automobile 1 comprenant une structure de caisse **10** pourvue d'un plancher **11**, et comportant en outre au moins une porte **20** sur laquelle est monté un dispositif de protection **100**, **200**, **300** tel que précédemment décrit.

## Revendications

1. Porte (20) de véhicule automobile (1) réalisée selon l'assemblage d'un caisson (21) et d'un panneau extérieur (22), la porte (20) étant destinée à être montée mobile en déplacement par rapport à une structure de caisse (10) intégrant un plancher (11), et comportant un dispositif de protection (100, 200, 300) , **caractérisée en ce que** le dispositif un dispositif (100, 200, 300) comporte un élément de renfort (110, 210, 310) qui est solidarisé fixement sous la porte (20), au niveau d'une paroi inférieure (23) du caisson (21) et d'une paroi arrière (24) du caisson (21) et qui est destiné à s'étendre directement en regard du plancher (11) lorsque ladite porte (20) est en position fermée, ainsi qu'un élément de protection (120, 220, 320) recouvrant l'élément de renfort (110, 210, 310), l'élément de protection (120, 220, 320) étant solidarisé à la porte (20) de manière amovible.

2. Porte (20) selon la revendication 1, **caractérisée en ce que** l'élément de renfort (110, 210, 310) est solidarisé à la porte (20) de manière amovible.

3. Porte (20) selon l'une des revendications 1 ou 2, **caractérisée en ce que** l'élément de renfort (110, 210) est constitué par un profilé extrudé (111).

4. Porte (20) selon l'une des revendications 1 à 2, **caractérisée en ce que** l'élément de renfort (310) est constitué par un tube (311) qui est solidarisé à la porte (20) par l'intermédiaire d'un support (312).

5. Porte (20) selon l'une quelconque des revendications 1 à 4, **caractérisée en ce que** l'élément de renfort (110, 210, 310) est réalisé en métal, et de préférence en aluminium.

6. Porte (20) selon l'une quelconque des revendications 1 à 5, **caractérisée en ce que** l'élément de renfort (110, 210, 310) comporte au moins un moyen de centrage (119), typiquement un trou de centrage, apte à coopérer par emboîtement avec un élément saillant (240, 241) solidaire de la structure de caisse (10), lorsque la porte (20) est en position fermée.

7. Porte (20) selon l'une quelconque des revendications 1 à 6, **caractérisée en ce que** l'élément de protection (120, 220, 320) recouvre la face avant (116) de l'élément de renfort (110, 210, 310).

8. Porte (20) selon la revendication 7, **caractérisée en ce que** l'élément de protection (120, 220, 320) est solidarisé à l'élément de renfort (110, 210, 310) de manière amovible.

9. Porte (20) selon l'une des revendications 7 et 8, **caractérisée en ce que** l'élément de protection (120, 220, 320) recouvre en outre les faces latérales de l'élément de renfort (110,210,310).

10. Porte (20) selon l'une quelconque des revendications 7 à 9, **caractérisée en ce que** l'élément de protection (120, 220, 320) enveloppe l'élément de renfort (110, 210, 310).

11. Porte (20) selon l'une quelconque des revendications 7 à 10, **caractérisée en ce que** l'élément de protection (120, 220, 320) est réalisé en matière plastique.

12. Porte (20) selon l'une quelconque des revendications 1 à 11, **caractérisée en ce qu'**elle comporte un élément d'étanchéité (230) qui est emboîté avec l'élément de protection (220) pour former un ensemble sensiblement étanche qui enveloppe conjointement l'élément de renfort (210) et la partie basse de la porte (20).

13. Porte (20) selon la revendication 12, **caractérisée en ce que** l'élément d'étanchéité (230) est solidarisé à la partie basse de la porte (20) de manière amovible.

14. Porte (20) selon l'une des revendications 12 ou 13, **caractérisée en ce que** l'élément d'étanchéité (230) est solidarisé à l'élément de renfort (210) de manière amovible.

15. Porte (20) selon l'une quelconque des revendications 1 à 14, **caractérisée en ce qu'**il comporte des moyens d'étanchéité (130) assurant une continuité formelle entre la face arrière de la porte (20) et la face arrière de l'élément de renfort (110).

16. Porte (20) selon l'une quelconque des revendications 1 à 15, **caractérisée en ce qu'**il est apte à s'intégrer dans un logement (18, 19) de forme sensiblement complémentaire, qui est ménagé dans la structure de caisse (10) au niveau du plancher (11).

17. Véhicule automobile (1) comprenant une structure de caisse (10) pourvue d'un plancher (11), **caractérisé en ce qu'**il comporte en outre au moins une porte (20) sur laquelle est monté un dispositif de protection (100, 200, 300) selon l'une quelconque des revendications 1 à 16.

18. Véhicule automobile (1) selon la revendication 17, **caractérisé en ce que** pour chaque porte (20) associée à un dispositif de protection (100, 200, 300), la structure de caisse (10) comporte un logement (18, 19) apte à recevoir ledit dispositif de protection (100, 200, 300) lorsque ladite porte (20) est en position fermée.

19. Véhicule automobile (1) selon l'une des revendications 17 ou 18, **caractérisé en ce que** pour chaque porte (20) associée à un dispositif de protection (100, 200, 300), la structure de caisse (10) comporte au moins un élément saillant (240, 241) apte à coopérer par emboîtement avec un moyen de centrage (119) ménagé dans l'élément de renfort (110,210,310).

## Patentansprüche

1. Durch Zusammenfügen eines Kastens (21) und einer Außenbeplankung (22) hergestellte Tür (20) für ein Kraftfahrzeug (1), wobei die Tür (20) bezüglich einer Aufbaustruktur (10), die einen Boden (11) enthält, verschiebbar montiert werden soll und eine Schutzvorrichtung (100, 200, 300) aufweist, **dadurch gekennzeichnet, dass** die Schutzvorrichtung (100, 200, 300) ein Verstärkungselement (110, 210, 310), das unter der Tür (20) an einer Unterwand (23) des Kastens (21) und einer Rückwand (24) des Kastens (21) fest verbunden ist und das sich direkt gegenüber dem Boden (11) erstrecken soll, wenn sich die Tür (20) in einer geschlossenen Stellung befindet, sowie ein Schutzelement (120, 220, 320), das das Verstärkungselement (110, 210, 310) bedeckt, umfasst, wobei das Schutzelement (120, 220, 320) auf lösbare Weise fest mit der Tür (20) verbunden ist.

2. Tür (20) nach Anspruch 1, **dadurch gekennzeichnet, dass** das Verstärkungselement (110, 210, 310) auf lösbare Weise fest mit der Tür (20) verbunden ist.

3. Tür (20) nach einem der Ansprüche 1 oder 2, **dadurch gekennzeichnet, dass** das Verstärkungselement (110, 210) aus einem extrudierten Profil (111) besteht.

4. Tür (20) nach einem der Ansprüche 1 bis 2, **dadurch gekennzeichnet, dass** das Verstärkungselement (310) durch ein Rohr (311) gebildet wird, das mittels eines Trägers (312) fest mit der Tür (20) verbunden ist.

5. Tür (20) nach einem der Ansprüche 1 bis 4, **dadurch gekennzeichnet, dass** das Verstärkungselement (110, 210, 310) aus Metall, vorzugsweise Aluminium, hergestellt ist.

6. Tür (20) nach einem der Ansprüche 1 bis 5, **dadurch gekennzeichnet, dass** das Verstärkungselement (110, 210, 310) mindestens ein Zentriermittel (119), in der Regel ein Zentrierloch, aufweist, das durch Ineinanderstecken mit einem vorspringenden Element (240, 241), das fest mit der Aufbaustruktur (10) verbunden ist, wenn sich die Tür (20) in der geschlossenen Stellung befindet, zusammenwirken kann.

7. Tür (20) nach einem der Ansprüche 1 bis 6, **dadurch gekennzeichnet, dass** das Schutzelement (120, 220, 320) die Vorderseite (116) des Verstärkungselements (110, 210, 310) bedeckt.

8. Tür (20) nach Anspruch 7, **dadurch gekennzeichnet, dass** das Schutzelement (120, 220, 320) auf lösbare Weise fest mit dem Verstärkungselement (110, 210, 310) verbunden ist.

9. Tür (20) nach Anspruch 7 und 8, **dadurch gekennzeichnet, dass** das Schutzelement (120, 220, 320) des Weiteren die Seitenflächen des Verstärkungselements (110, 210, 310) bedeckt.

10. Tür (20) nach einem der Ansprüche 7 bis 9, **dadurch gekennzeichnet, dass** das Schutzelement (120, 220, 320) das Verstärkungselement (110, 210, 310) umhüllt.

11. Tür (20) nach einem der Ansprüche 7 bis 10, **dadurch gekennzeichnet, dass** das Schutzelement (120, 220, 320) aus Kunststoffmaterial hergestellt ist.

12. Tür (20) nach einem der Ansprüche 1 bis 11, **dadurch gekennzeichnet, dass** sie ein Dichtungselement (230) umfasst, das mit dem Schutzelement (220) in Eingriff steht, um eine im Wesentlichen dichte Baugruppe zu bilden, die gemeinsam das Verstärkungselement (210) und den unteren Teil der Tür (20) umhüllt.

13. Tür (20) nach Anspruch 12, **dadurch gekennzeichnet, dass** das Dichtungselement (230) auf lösbare Weise fest mit dem unteren Teil der Tür (20) verbunden ist.

14. Tür (20) nach einem der Ansprüche 12 oder 13, **dadurch gekennzeichnet, dass** das Dichtungselement (230) auf lösbare Weise fest mit dem Verstärkungselement (210) verbunden ist.

15. Tür (20) nach einem der Ansprüche 1 bis 14, **dadurch gekennzeichnet, dass** sie Dichtungsmittel (130) umfasst, die eine Formkontinuität zwischen der Rückseite der Tür (20) und der Rückseite des Verstärkungselements (110) gewährleisten.

16. Tür (20) nach einem der Ansprüche 1 bis 15, **dadurch gekennzeichnet, dass** sie in einer Aufnahme (18, 19) mit im Wesentlichen komplementärer Form, die in der Aufbaustruktur (10) am Boden (11) ausgebildet ist, aufgenommen werden kann.

17. Kraftfahrzeug (1), das eine mit einem Boden (11) versehene Aufbaustruktur (10) umfasst, **dadurch gekennzeichnet, dass** sie des Weiteren mindestens eine Tür (20) aufweist, an der eine Schutzvorrichtung (100, 200, 300) nach einem der Ansprüche 1 bis 16 angebracht ist.

18. Kraftfahrzeug (1) nach Anspruch 17, **dadurch gekennzeichnet, dass** für jede Tür (20), die mit einer Schutzvorrichtung (100, 200, 300) verbunden ist, die Aufbaustruktur (10) eine Aufnahme (18, 19) aufweist, die die Schutzvorrichtung (100, 200, 300) aufnehmen kann, wenn sich die Tür (20) in geschlossener Stellung befindet.

19. Kraftfahrzeug (1) nach Anspruch 17 oder 18, **dadurch gekennzeichnet, dass** für jede Tür (20), die mit einer Schutzvorrichtung (100, 200, 300) verbunden ist, die Aufbaustruktur (10) mindestens ein vorspringendes Element (240, 241) aufweist, das durch Ineinandergreifen mit einem in dem Verstärkungselement (110, 210, 310) ausgebildeten Zentriermittel (119) zusammenwirken kann.

## Claims

1. Door (20) of a motor vehicle (1) produced by assembling a casing (21) and an outer panel (22), the door (20) being intended to be mounted movably with respect to a body shell structure (10) incorporating a floor (11), and comprising a protection device (100, 200, 300), **characterized in that** the protection device (100, 200, 300) comprises a reinforcing element (110, 210, 310) which is secured fixedly below the door (20) at a lower wall (23) of the casing (21) and at a rear wall (24) of the casing (21) and which is intended to extend directly facing the floor (11) when the said door (20) is in the closed position, and a protection element (120, 220, 320) covering the reinforcing element (110, 210, 310), the protection element (120, 220, 320) being secured to the door (20) in a removable manner.

2. Door (20) according to Claim 1, **characterized in that** the reinforcing element (110, 210, 310) is secured to the door (20) in a removable manner.

3. Door (20) according to either of Claims 1 and 2, **characterized in that** the reinforcing element (110, 210) is constituted by an extruded profile (111).

4. Door (20) according to either of Claims 1 and 2, **characterized in that** the reinforcing element (310) is constituted by a tube (311) which is secured to the door (20) by way of a support (312).

5. Door (20) according to any one of Claims 1 to 4, **characterized in that** the reinforcing element (110, 210, 310) is made of metal, preferably aluminium.

6. Door (20) according to any one of Claims 1 to 5, **characterized in that** the reinforcing element (110, 210, 310) comprises at least one centring means (119), typically a centring hole, able to cooperate by engagement with a projecting element (240, 241) secured to the body shell structure (10), when the door (20) is in the closed position.

7. Door (20) according to any one of Claims 1 to 6, **characterized in that** the protection element (120, 220, 320) covers the front face (116) of the reinforcing element (110, 210, 310).

8. Door (20) according to Claim 7, **characterized in that** the protection element (120, 220, 320) is secured to the reinforcing element (110, 210, 310) in a removable manner.

9. Door (20) according to either of Claims 7 and 8, **characterized in that** the protection element (120, 220, 320) additionally covers the lateral faces of the reinforcing element (110, 210, 310).

10. Door (20) according to any one of Claims 7 to 9, **characterized in that** the protection element (120, 220, 320) envelops the reinforcing element (110, 210, 310).

11. Door (20) according to any one of Claims 7 to 10, **characterized in that** the protection element (120, 220, 320) is made of plastic.

12. Door (20) according to any one of Claims 1 to 11, **characterized in that** it comprises a sealing element (230) which is engaged with the protection element (220) to form a substantially sealed assembly which conjointly envelops the reinforcing element (210) and the bottom part of the door (20).

13. Door (20) according to Claim 12, **characterized in that** the sealing element (230) is secured to the bottom part of the door (20) in a removable manner.

14. Door (20) according to either of Claims 12 and 13, **characterized in that** the sealing element (230) is secured to the reinforcing element (210) in a removable manner.

15. Door (20) according to any one of Claims 1 to 14, **characterized in that** it comprises sealing means (130) providing formal continuity between the rear face of the door (20) and the rear face of the reinforcing element (110).

16. Door (20) according to any one of Claims 1 to 15, **characterized in that** it is able to be integrated into a housing (18, 19) of substantially complementary shape which is formed in the body shell structure (10) at the level of the floor (11).

17. Motor vehicle (1) comprising a body shell structure (10) provided with a floor (11), **characterized in that** it additionally comprises at least one door (20) on which there is mounted a protection device (100, 200, 300) according to any one of Claims 1 to 16.

18. Motor vehicle (1) according to Claim 17, **characterized in that**, for each door (20) associated with a protection device (100, 200, 300), the body shell structure (10) comprises a housing (18, 19) able to receive the said protection device (100, 200, 300) when the said door (20) is in the closed position.

19. Motor vehicle (1) according to either of Claims 17 and 18, **characterized in that**, for each door (20) associated with a protection device (100, 200, 300), the body shell structure (10) comprises at least one projecting element (240, 241) able to cooperate by engagement with a centring means (119) formed in the reinforcing element (110, 210, 310).
